# NEUE EUROPÄISCHE PATENTSCHRIFT

(11) **EP 3 558 556 B2**
(45) Veröffentlichungstag und Bekanntmachung des Hinweises auf die Entscheidung über den Einspruch: **17.09.2025**
(45) Hinweis auf die Patenterteilung: 27.01.2021
(21) Anmeldenummer: 17835793.5
(22) Anmeldetag: 19.12.2017
(51) Int. Cl.: B21D 5/02, B21D 37/14

(54) **WERKZEUGMAGAZIN FÜR EINE BIEGEMASCHINE**
TOOL MAGAZINE FOR A BENDING MACHINE
MAGASIN D'OUTILS POUR CINTREUSE

(30) Priorität: 21.12.2016 AT 511682016
(43) Veröffentlichungstag der Anmeldung: 30.10.2019
(73) Patentinhaber: TRUMPF Maschinen Austria GmbH & Co. KG., 4061 Pasching (AT)
(72) Erfinder: GRUBER, Stefan, 4770 Andorf (AT); SEFLER, Christoph, 4493 Wolfern (AT)
(74) Vertreter: Burger, Hannes
(86) Internationale Anmeldenummer: PCT/AT2017/060339
(87) Internationale Veröffentlichungsnummer: WO 2018/112493

(56) Entgegenhaltungen:
- EP-A2- 2 138 247
- WO-A1-2016/055906
- JP-A- 2001 150 032
- JP-A- 2003 136 143
- JP-A- 2015 120 182
- JP-A- H1 071 499
- US-A1- 2014 225 494

## Beschreibung

Die Erfindung betrifft ein Werkzeugmagazin für eine Biegemaschine.

Aus der JP2015120182A ist ein Werkzeugspeicher bekannt, welcher neben der Abkantpresse angeordnet ist und zur Aufnahme von mehreren Biegewerkzeugen dient.

Der aus der JP2015120182A bekannte Werkzeugspeicher weist einen komplexen Aufbau auf und ist daher fehleranfällig.

Die JP 2003 136143 A, die WO 2016/055906 A1 und die US 2014/225494 A1 offenbaren ein Werkzeugmagazin für eine Biegemaschine, wobei das Werkzeugmagazin mehrere Speicherschienen aufweist, welche in einem Magazingehäuse angeordnet sind und zur Aufnahme von Biegewerkzeugen dienen. Die Speicherschienen sind derart ausgebildet, dass in deren Längserstreckung mehrere Biegewerkzeuge hintereinander gereiht Platz finden. Die Speicherschienen sind in Richtung deren Längserstreckung aus einer Vorderseite des Magazingehäuses ausziehbar.

Aufgabe der vorliegenden Erfindung war es, die Nachteile des Standes der Technik zu überwinden und ein Werkzeugmagazin für eine Fertigungsanlage zur Verfügung zu stellen, welches bei hoher Funktionalität einen einfachen Aufbau aufweist.

Diese Aufgabe wird durch eine Vorrichtung und ein Verfahren gemäß den Ansprüchen gelöst.

Erfindungsgemäß ist ein Werkzeugmagazin für eine Biegemaschine, insbesondere für eine Abkantpresse ausgebildet. Das Werkzeugmagazin weist mehrere Speicherschienen auf, welche in einem Magazingehäuse angeordnet sind und zur Aufnahme von Biegewerkzeugen dienen, wobei die Speicherschienen derart ausgebildet sind, dass in deren Längserstreckung mehrere Biegewerkzeuge hintereinander gereiht Platz finden. Die Speicherschienen sind in Richtung deren Längserstreckung aus einer Vorderseite des Magazingehäuses ausziehbar.

Von Vorteil an der erfindungsgemäßen Ausbildung des Werkzeugmagazins ist, dass dieses durch das Schubladenkonzept einen einfachen Aufbau aufweist. Außerdem sind die Speicherschienen durch deren Ausziehbarkeit aus der Vorderseite des Magazingehäuses für den Maschinenbediener leicht zugänglich, wodurch das Werkzeugmagazin dem Maschinenbediener leicht zugängig ist und die einzelnen Biegewerkzeuge ohne großen Kraftaufwand aus den Speicherschienen herausgenommen werden können.

Weiters kann es zweckmäßig sein, wenn die Speicherschienen einzeln und unabhängig voneinander aus dem Magazingehäuse ausziehbar sind. Von Vorteil ist hierbei, dass durch diese Maßnahme erreicht werden kann, dass nur jene Speicherschiene aus dem Werkzeugmagazin herausgezogen werden muss, in welcher auch die gewünschten Biegewerkzeuge aufgenommen sind. Dadurch kann aufgrund der geringen zu bewegenden Masse der Kraftaufwand zum Ausziehen der Speicherschiene gering gehalten werden und somit die Ergonomie des Werkzeugmagazins weiter erhöht werden.

Ferner kann vorgesehen sein, dass die einzelnen Speicherschienen übereinanderliegend im Magazingehäuse angeordnet sind. Von Vorteil ist hierbei, dass durch diese Maßnahme das Werkzeugmagazin eine geringe Breite aufweisen kann und die Höhe des Werkzeugmagazins als Speicher dient.

Darüber hinaus sieht die Erfindung vor, dass eine der Speicherschienen jeweils zur Aufnahme eines Biegestempels und eines Biegegesenks ausgebildet ist, wobei eine untere Aufnahmenut zur Aufnahme des Biegestempels ausgebildet ist und eine obere Aufnahmenut zur Aufnahme des Biegegesenks ausgebildet ist. Von Vorteil ist hierbei, dass durch diese Maßnahme die zusammengehörenden Biegestempel und Biegegesenke auf einer gemeinsamen Speicherschiene angeordnet werden können und somit dem Maschinenbediener übersichtlich zur Verfügung stehen. Darüber hinaus kann durch diese Maßnahme die notwendige Anzahl an Speicherschienen reduziert werden, da pro Speicherschiene die doppelte Anzahl an Biegewerkzeugen aufgenommen werden kann. Ein weiterer Vorteil dieser Ausführung der Speicherschienen ist, dass die Biegestempel bereits lagerichtig in der Speicherschiene aufgenommen werden können und somit die Ergonomie des Werkzeugmagazins weiter erhöht werden kann. Vorteilhaft ist auch eine Ausprägung, gemäß welcher vorgesehen sein kann, dass in der unteren Aufnahmenut eine Ausnehmung angeordnet ist, in welche eine Riegelnase des Biegestempels eingreifen kann. Dadurch kann erreicht werden, dass speziell ausgebildete Biegewerkzeuge, wie sie beispielsweise in der WO 2004/024361A1 beschrieben sind, von unten direkt in die Speicherschiene eingesetzt werden können.

Gemäß der Erfindung ist die Speicherschiene mittels einem Teleskopschienensystem im Magazingehäuse aufgenommen. Von Vorteil ist hierbei, dass durch diese Maßnahme die Speicherschienen zur Gänze aus dem Magazingehäuse ausgezogen werden können, um dadurch eine bessere Zugänglichkeit der Biegewerkzeuge zu erreichen.

Ferner kann es zweckmäßig sein, wenn das Teleskopschienensystem eine erste Gleitschiene aufweist, welche am Magazingehäuse aufgenommen ist, eine zweite Gleitschiene aufweist, welche an der Speicherschiene aufgenommen ist und zumindest eine dritte zwischen den beiden Gleitschienen angeordnete weitere Gleitschiene, wobei die einzelnen Gleitschienen mittels einer Gleitführung oder mittels Lagerkugeln miteinander gekoppelt sind. Besonders ein derartig ausgebildetes Teleskopschienensystem weist eine überraschend gute Funktionalität des Ausziehsystems bei hoher Steifigkeit und schlanker Dimensionierung auf.

Darüber hinaus kann vorgesehen sein, dass an einzelnen der Speicherschienen stirnseitig ein Haltegriff angeordnet ist. Von Vorteil ist hierbei, dass die Speicherschienen durch diese Maßnahme einfach aus dem Werkzeugmagazin auszuziehen sind.

Weiters kann vorgesehen sein, dass an einzelnen der Speicherschienen stirnseitig ein Blendenabschnitt angeordnet ist. Von Vorteil ist hierbei, dass bei eingefahrenen Speicherschienen die Vorderseite des Werkzeugmagazins weitestgehend abgeschlossen ist und dadurch das Ansammeln von Schmutz im Werkzeugmagazin vermieden werden kann.

Gemäß einer besonderen Ausprägung ist es möglich, dass im Magazingehäuse mehrere Speicherschienenfächer nebeneinander angeordnet sind, wobei in einzelnen der Speicherschienenfächer mehrere Speicherschienen übereinander angeordnet sind. Von Vorteil ist hierbei, dass durch diese Maßnahme die Kapazität des Werkzeugmagazins vergrößert werden kann.

Entsprechend einer vorteilhaften Weiterbildung kann vorgesehen sein, dass zumindest eine der Speicherschienen quer zur Längserstreckung aus einer Seitenwand des Magazingehäuses ausziehbar ist. Eine derartig ausgebildete Speicherschiene kann insbesondere zum Aufnehmen von schweren Biegewerkzeugen dienen, welche die Statik von längs ausziehbaren Speicherschienen überbeanspruchen würde.

Insbesondere kann es vorteilhaft sein, wenn mehr als 50% der Speicherschienen in einer Höhe vom Boden zwischen 60cm und 170cm angeordnet sind. Von Vorteil ist hierbei, dass durch diese Maßnahme der Großteil der oft verwendeten Biegewerkzeuge in der genannten Höhe besonders ergonomisch vom Maschinenbediener aus dem Werkzeugmagazin herausgenommen werden können.

Ferner kann vorgesehen sein, dass einzelne der Speicherschienen in deren Höhe verstellbar sind. Von Vorteil ist hierbei, dass die Speicherschienen durch diese Maßnahme in eine Höhe verschoben werden können, in welcher die einzelnen Biegewerkzeuge einfach und ergonomisch aus dem Werkzeugmagazin herausgenommen werden können.

Darüber hinaus kann vorgesehen sein, dass die einzelnen Speicherschienen an einem Umlaufsystem angeordnet sind. Von Vorteil ist hierbei, dass eine große Anzahl von Speicherschienen im Werkzeugmagazin aufgenommen sein können und dass zur Herausnahme der Biegewerkzeuge aus den Speicherschienen die Speicherschienen in einer ergonomischen Höhe bereitgestellt werden können.

Vorteilhaft ist auch eine Ausprägung, gemäß welcher vorgesehen sein kann, dass die einzelnen Speicherschienen mittels einer Riegelvorrichtung gegeneinander verriegelt sind, sodass im ausgezogenen Zustand einer Speicherschiene die weiteren Speicherschienen nicht ausgezogen werden können. Dadurch kann erreicht werden, dass nicht mehrere Speicherschienen gleichzeitig aus dem Werkzeugmagazin herausgezogen werden können. Dadurch kann vermieden werden, dass die Kippstabilität des Werkzeugmagazins geschwächt werden würde, was zu einer erhöhten Unfallgefahr führen könnte.

Gemäß einer Weiterbildung ist es möglich, dass zusätzlich zu den Speicherschienen eine Werkzeuglade im Magazingehäuse aufgenommen ist und aus dessen Vorderseite ausziehbar ist. Von Vorteil ist hierbei, dass durch diese Maßnahme neben den Biegewerkzeugen auch Messwerkzeuge oder sonstiges Material im Werkzeugmagazin verstaut werden kann.

Ferner kann es zweckmäßig sein, wenn dass die Speicherschienen eine Länge zwischen 50cm und 200cm, insbesondere zwischen 80cm und 150cm, aufweisen. Vor allem Speicherschienen in diesem Längenbereich stellen einen guten Kompromiss zwischen ausreichender Aufnahmekapazität und ausreichend großer Festigkeit des Werkzeugmagazins dar.

Weiters kann eine Fertigungsanlage vorgesehen sein, die eine Biegemaschine und ein Werkzeugmagazin umfasst, welches neben einer Seitenwange der Biegemaschine angeordnet ist. Das Werkzeugmagazin ist hierbei wie oben beschrieben ausgebildet.

Von Vorteil an einem derartigen Layout der Fertigungsanlage ist, dass das Werkzeugmagazin für den Maschinenbediener einfach erreichbar neben der Biegemaschine angeordnet ist. Dadurch ist ein ergonomisch günstiges Arbeiten möglich.

Die Speicherschiene kann vorzugsweise aus einem Material gebildet sein, welches bei ausreichender Festigkeit eine geringe Dichte aufweist. Ein derartiges Material kann beispielsweise Aluminium sein. Außerdem kann ein derartiges Material beispielsweise auch Kunststoff sein. Alternativ oder zusätzlich kann vorgesehen sein, dass die Speicherschiene zur Gewichtsminimierung beispielsweise als Hohlkörper ausgebildet ist. Dies kann beispielsweise durch Herstellung eines Strangguss-Hohlprofiles erreicht werden. Weiters kann auch vorgesehen sein, dass die Speicherschiene aus einem Blechumformstück gebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Fertigungsanlage mit einer Biegemaschine und einem Werkzeugmagazin;
- Fig. 2: eine Schnittdarstellung eines ersten Ausführungsbeispiels des Werkzeugmagazins;
- Fig. 3: eine Detailansicht einer Speicherschiene im Werkzeugmagazin;
- Fig. 4: eine Seitenansicht eines zweiten Ausführungsbeispiels der Speicherschiene im Werkzeugmagazin;
- Fig. 5: eine Detailansicht des zweiten Ausführungsbeispiels der Speicherschiene im Werkzeugmagazin.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

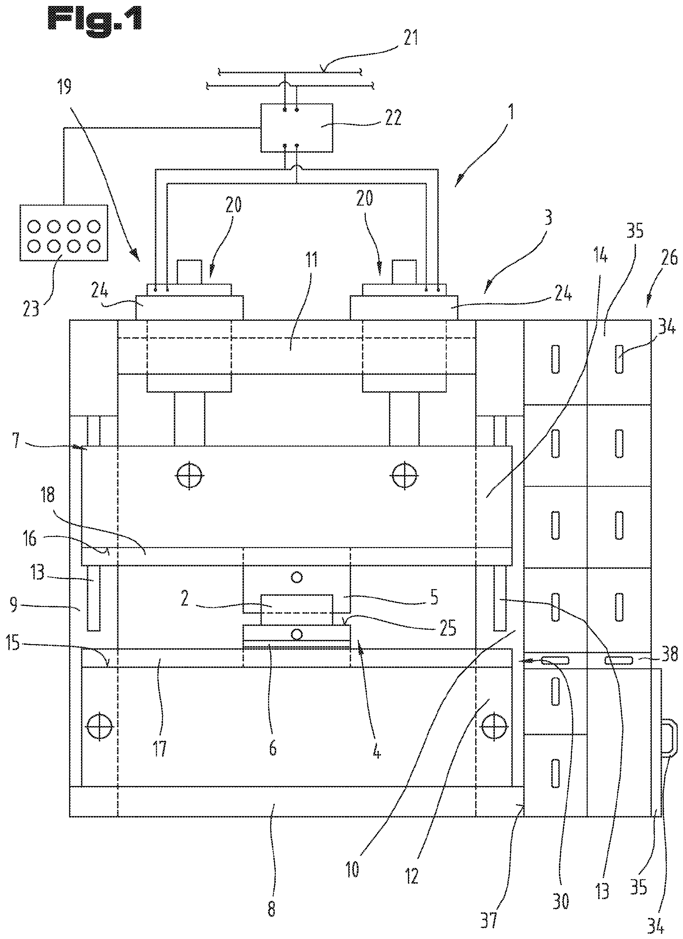

In der Fig. 1 ist eine Ausführungsvariante einer Fertigungsanlage 1 für das Freibiegen von aus Blech zu fertigenden Werkstücken 2 in einer schematisch vereinfachten Darstellung gezeigt.

Die Fertigungsanlage 1 umfasst eine Biegemaschine 3, insbesondere eine Abkantpresse, zur Herstellung der Werkstücke 2 bzw. Werkteile zwischen relativ zueinander verstellbaren Biegewerkzeugen 4, wie Biegestempel 5 und Biegegesenk 6. Der Biegestempel 5 kann dabei auch als Oberwerkzeug und das Biegegesenk 6 auch als Unterwerkzeug bezeichnet werden.

Ein Maschinengestell 7 der Biegemaschine 3 umfasst beispielsweise eine Bodenplatte 8, auf der vertikal aufragend, zueinander in Querrichtung beabstandet und parallel zueinander ausgerichtete Seitenwangen 9, 10 angeordnet sein können. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 können zur Bildung eines Freiraumes für das Umformen des Werkstücks 2 etwa C - förmig ausgebildet sein, wobei an den Seitenwangen 9, 10 ein feststehender, insbesondere auf der Bodenplatte 8 aufstehender, Pressbalken 12 befestigt sein kann. Dieser Pressbalken 12 kann auch als Tischbalken bezeichnet werden. Weiters kann in Linearführungen 13 ein zu dem Pressbalken 12 relativ verstellbarer weiterer Pressbalken 14, insbesondere ein Druckbalken, geführt gelagert sein.

Auf einander gegenüberliegenden, parallel zueinander verlaufenden Stirnflächen 15, 16 der beiden Pressbalken 12, 14 können Werkzeugaufnahmen 17, 18 zur Bestückung mit den Biegewerkzeugen 4 angeordnet bzw. ausgebildet sein.

Die gezeigte Biegemaschine 3 weist als Antriebsanordnung 19 für den verstellbaren Pressbalken 14, nämlich den Druckbalken, zumindest ein, hier zwei Antriebsmittel 20 auf, die z.B. mit elektrischer Energie aus einem Energienetz 21 oder durch einen Hydraulikkreislauf angespeist sind und zusätzlich noch mit einer Steuervorrichtung 22 leitungsverbunden sein können. Über ein mit der Steuervorrichtung 22 leitungsverbundenes Eingabeterminal 23 wird beispielsweise der Betrieb der Biegemaschine 3 gesteuert.

Bei den Antriebsmitteln 20 kann es sich z.B. um elektromotorische Spindeltriebe 24 handeln, wie sie allgemein bekannt sind.

Unabhängig davon wäre es aber auch noch möglich, das oder die Antriebsmittel 20 durch hydraulisch und/oder pneumatisch betätigbare Stellmittel zu bilden. Dabei können ZylinderKolbenanordnungen Anwendung finden. Es wären aber auch andere Antriebsmittel, wie z.B. Exzenterantriebe, Kniehebelantriebe, Zahnstangenantriebe usw. denkbar.

Sämtliche obig genannte Ausführungsmerkmale bzw. Einzelmerkmale der Figurenbeschreibung sind genannt, um eine Exemplarische Fertigungsanlage 1 bzw. Biegemaschine 3 zu beschreiben, auf die im erfindungswesentlichen, folgenden Teil der Figurenbeschreibung Bezug genommen werden kann. Sämtliche beschriebenen Einzelmerkmale sind daher für die erfindungsgemäße Ausbildung nicht zwingend erforderlich und können weggelassen, oder durch andere Merkmale ersetzt werden, um eine funktionsfähige Biegemaschine 3 zu erhalten.

Die Biegewerkzeuge 4 weisen eine Biegekante 25 auf, welche sich in einer Längsrichtung des Biegewerkzeuges 4 erstreckt. Die Biegekante 25 definiert auch den Verlauf der Biegelinie am zu biegenden Werkstück 2. Die Biegewerkzeuge 4 können derart in der Werkzeugaufnahme 17, 18 aufgenommen sein, dass sie in einer zur Biegekante 25 parallelen Richtung bedarfsweise verschiebbar sind.

Wie aus Fig. 1 weiters ersichtlich, kann vorgesehen sein, dass die Fertigungsanlage 1 ein Werkzeugmagazin 26 umfasst, welches zur Aufnahme der Biegewerkzeuge 4 dient.

Insbesondere kann vorgesehen sein, dass das Werkzeugmagazin 26 neben einer der Seitenwangen 9, 10 der Biegemaschine 3 angeordnet ist. Weiters kann vorgesehen sein, dass beiderseits der Biegemaschine 3 neben den Seitenwangen 9, 10 ein Werkzeugmagazin 26 angeordnet ist.

Darüber hinaus ist es auch denkbar, dass zwei Werkzeugmagazine 26 nebeneinander neben einer der Seitenwangen 9, 10 der Biegemaschine 3 angeordnet sind.

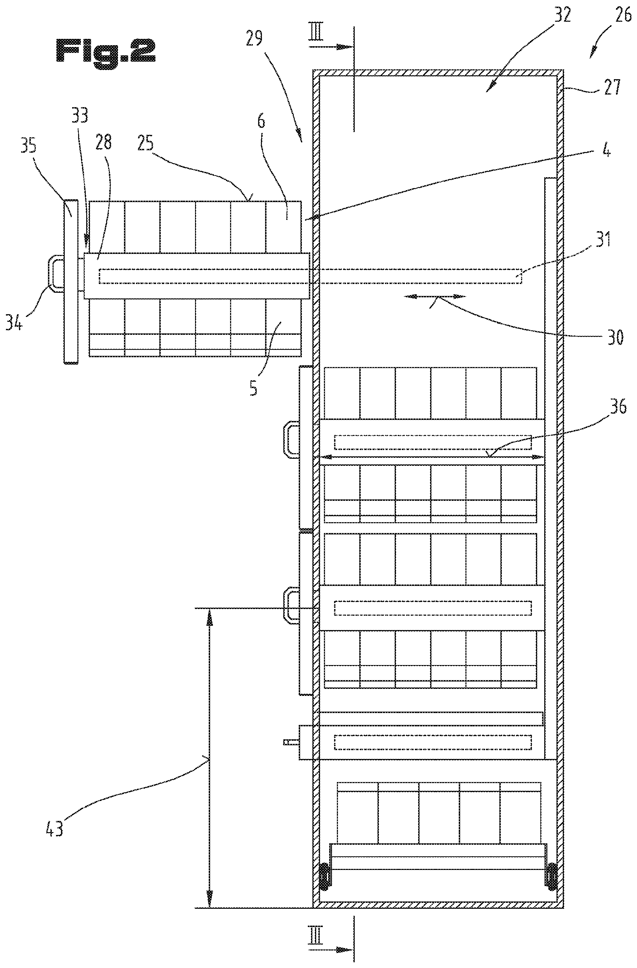

In der Fig. 2 ist eine weitere und gegebenenfalls für sich eigenständige Ausführungsform des Werkzeugmagazins 26 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In Fig. 2 ist ein weiteres Ausführungsbeispiel des Werkzeugmagazins 26 in einer Seitenansicht dargestellt, wobei ein Magazingehäuse 27 des Werkzeugmagazins 26 geschnitten dargestellt ist, sodass das Innenleben des Werkzeugmagazins 26 ersichtlich ist.

Die weitere Beschreibung basiert auf einer Zusammenschau der Fig. 1 und 2. Wie aus Fig. 2 ersichtlich, kann vorgesehen sein, dass im Magazingehäuse 27 mehrere Speicherschienen 28 angeordnet sind, welche zur Aufnahme von Biegewerkzeugen 4 dienen. Insbesondere kann vorgesehen sein, dass mehrere Speicherschienen 28 im Magazingehäuse 27 aufgenommen sind, wobei die Speicherschienen 28 aus einer Vorderseite 29 des Werkzeugmagazins 26 ausziehbar sind.

Insbesondere ist hier vorgesehen, dass die Speicherschienen 28 in Richtung deren Längserstreckung 30 aus dem Magazingehäuse 27 ausziehbar sind. Die Längserstreckung 30 der Speicherschiene 28 wird hierbei als jene Richtung definiert, in welcher mehrere Biegewerkzeuge 4 hintereinander in der Speicherschiene 28 aufgenommen werden können. Mit anderen Worten ausgedrückt, liegt die Längserstreckung 30 der Speicherschiene 28 parallel zur Biegekante 25 von in der Speicherschiene 28 aufgenommenen Biegewerkzeugen 4.

Insbesondere kann vorgesehen sein, dass die Speicherschienen 28 analog zu einem Schubladensystem aus dem Magazingehäuse 27 ausziehbar sind. Ein derartiges Schubladensystem kann beispielsweise mittels einem Teleskopschienensystem 31 erreicht werden. Insbesondere kann dabei vorgesehen sein, dass an beiden Seiten der Speicherschiene 28 ein Teleskopschienensystem 31 angeordnet ist.

Mehrere übereinander angeordnete Speicherschienen 28 bilden ein Speicherschienenfach 32. Wie aus Fig. 1 ersichtlich, kann vorgesehen sein, dass in einem gemeinsamen Magazingehäuse 27 mehrere Speicherschienenfächer 32 nebeneinander angeordnet sind, wobei jedes der Speicherschienenfächer 32 mehrere Speicherschienen 28 aufweist, welche übereinander angeordnet sind. Insbesondere ist vorgesehen, dass die Speicherschienen 28 einzeln und unabhängig voneinander aus dem Werkzeugmagazin 26 ausziehbar sind.

Hierbei kann vorgesehen sein, dass die Speicherschienen 28 in einem aus dem Werkzeugmagazin 26 ausgezogenen Zustand freikragend gegenüber dem Magazingehäuse 27 vorragen und nur durch das Teleskopschienensystem 31 gehalten werden. Das Teleskopschienensystem 31 wird hierbei aufgrund der Masse der einzelnen in der Speicherschiene 28 aufgenommenen Biegewerkzeuge 4 mit einem nicht unwesentlichen Biegemoment belastet. Daher ist es notwendig, dass das Teleskopschienensystem 31 stabil genug ausgebildet ist, um das durch die Speicherschiene 28 aufgebrachte Biegemoment aufnehmen zu können.

Weiters kann an einer Vorderseite 33 der Speicherschiene 28 ein Haltegriff 34 angeordnet sein, welcher durch den Maschinenbediener gegriffen werden kann, um die Speicherschiene 28 aus dem Magazingehäuse 27 ausziehen zu können.

Der Haltegriff 34 kann verschiedenartig ausgebildet bzw. angeordnet sein. Wichtig ist hierbei nur, dass der Haltegriff 34 ergonomisch vom Maschinenbediener gegriffen werden kann, um die Speicherschiene 28 einfach und möglichst kraftschonend aus dem Magazingehäuse 27 ausziehen zu können.

Darüber hinaus kann vorgesehen sein, dass an der Vorderseite 33 der Speicherschiene 28 ein Blendenabschnitt 35 angeordnet ist, welcher die Vorderseite 33 der Speicherschiene 28 abdeckt und im geschlossenen Zustand bzw. im eingefahrenen Zustand der Speicherschiene 28 am Magazingehäuse 27 anliegt. Dadurch kann erreicht werden, dass die einzelnen Blendenabschnitte 35 mit dem Magazingehäuse 27 bei eingefahrenen Speicherschienen 28 eine gute Sichtblende bildet. Darüber hinaus können die Blendenabschnitte 35 dazu dienen, um das Innere des Magazingehäuses 27 nach außen hin abzuschließen und somit zu verhindern, dass Schmutz in das Innere des Magazingehäuses 27 gelangen kann.

Eine Länge 36 der Speicherschiene 28 ist vorzugsweise so gewählt, dass sich das Werkzeugmagazin 26 gut in die Fertigungsanlage 1 fügt bzw. dass ausreichend viele Biegewerkzeuge 4 an der Speicherschiene 28 aufgenommen werden können.

Wenn wie in Fig. 1 dargestellt, das Werkzeugmagazin 26 so neben der Biegemaschine 3 positioniert wird, dass eine Seitenwand 37 des Magazingehäuses 27 direkt an die Seitenwange 9, 10 der Biegemaschine 3 anschließt, so erscheint dies als günstige Aufstellung. Die einzelnen Speicherschienen 28 können hierbei im ausgezogenen Zustand vom Maschinenbediener leicht mit Biegewerkzeugen 4 bestückt werden bzw. die Biegewerkzeuge 4 von den Speicherschienen 28 entnommen und in die Biegemaschine 3 eingesetzt werden. Im eingeschobenen Zustand der Speicherschienen 28 kann eine Vorderseite 33 der Speicherschienen 28 bzw. die Vorderseite 29 des Werkzeugmagazins 26 bündig mit der Vorderseite der Biegemaschine 3 sein, wodurch das Werkzeugmagazin 26 im geschlossenen Zustand den Maschinenbediener nicht im Weg ist.

Weiters kann vorgesehen sein, dass im Werkzeugmagazin 26 eine Werkzeuglade 38 angeordnet ist, welche beispielsweise zur Aufnahme von Messinstrumenten oder von weiteren Werkzeugen, welche zur Wartung der Biegemaschine 3 dienen, ausgebildet ist. Die Werkzeuglade 38 kann ebenfalls an der Vorderseite 29 des Werkzeugmagazins 26 ausziehbar sein.

Wie aus den Fig. 1 und 2 weiters ersichtlich, kann darüber hinaus vorgesehen sein, dass zumindest eine der Speicherschienen 28 quer zur Längserstreckung 30 aus der Seitenwand 37 des Magazingehäuses 27 ausziehbar ist. Eine derartige Speicherschiene 28 kann zur Aufnahme von schweren Biegewerkzeugen 4 dienen, da die Auszugsweite nur gering sein muss, um die Biegewerkzeuge 4 zugänglich zu machen. Die quer ausziebare Speicherschiene 28 kann ebenfalls ein Teleskopschienensystem 31 aufweisen, wobei aufgrund des Querauszuges die Speicherschiene 28 nicht so weit aus dem Magazingehäuse 27 ausgezogen werden muss und dadurch die Belastung des Teleskopschienensystems 31 geringer ist.

Wie besonders gut aus Fig. 2 ersichtlich, sind die einzelnen Speicherschienen 28 in verschiedenen Höhen 43 gegenüber dem Boden angeordnet. Am leichtesten zu befüllen bzw. zu entleeren ist dabei jene Speicherschiene 28, welche in einer Höhe 43 von etwa 130 cm angeordnet ist. Weiters sollte darauf geachtet werden, dass eine möglichst große Anzahl an Speicherschienen 28 im Nahbereich dieser ergonomisch begünstigten Höhe angeordnet sind.

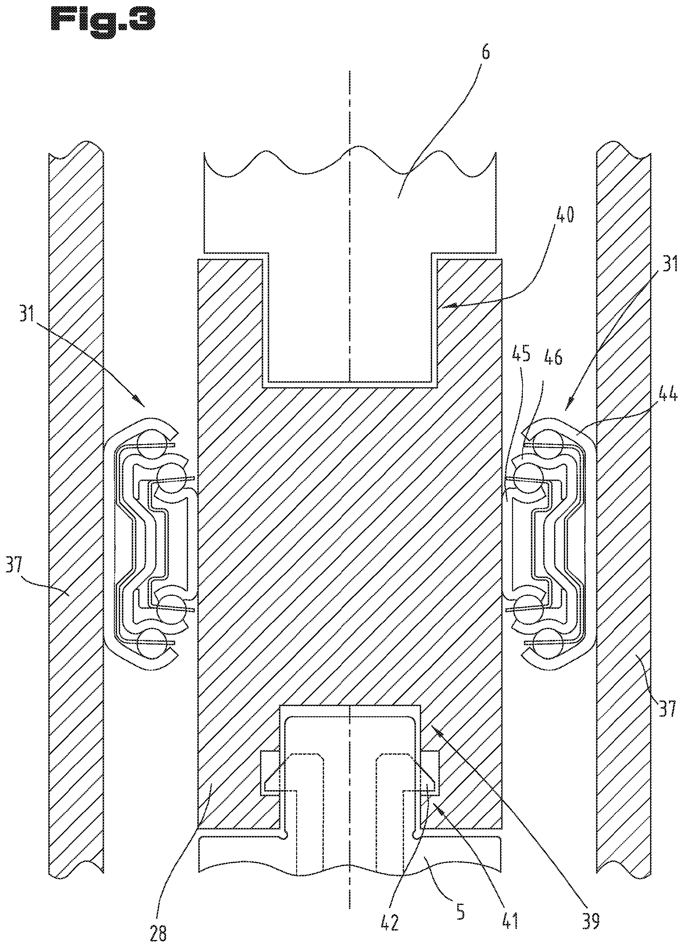

Fig. 3 zeigt eine Schnittdarstellung des Magazingehäuses 27 gemäß der Schnittlinie III - III in Fig. 2, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

In Fig. 3 ist der Übersichtlichkeit halber eine einzelne Speicherschiene 28 vergrößert dargestellt.

Wie aus Fig. 3 ersichtlich, kann vorgesehen sein, dass die Speicherschiene 28 sowohl zur Aufnahme eines Biegegesenkes 6 als auch zur Aufnahme eines Biegestempels 5 dient. Hierbei kann vorgesehen sein, dass an der Speicherschiene 28 eine untere Aufnahmenut 39 ausgebildet ist, welche zur Aufnahme des Biegestempels 5 dient und eine obere Aufnahmenut 40 ausgebildet ist, welche zur Aufnahme des Biegegesenkes 6 dient. Die beiden Aufnahmenuten 39, 40 können insbesondere analog zu den Werkzeugaufnahmen 17, 18 der Biegemaschine 3 ausgebildet sein. Insbesondere kann vorgesehen sein, dass das Biegegesenk 6 und der zugehörige Biegestempel 5 an einer gemeinsamen Speicherschiene 28 aufgenommen sind.

Weiters kann vorgesehen sein, dass in der unteren Aufnahmenut 39 eine Ausnehmung 41 ausgebildet ist in welche eine Riegelnase 42 des Biegestempels 5 eingreifen kann. Dadurch kann ein Biegestempel 5 wie er in der WO 2004/024361 A1 beschrieben ist, einfach in die Speicherschiene 28 eingesetzt werden.

Wie aus Fig. 3 besonders gut ersichtlich, kann vorgesehen sein, dass das Teleskopschienensystem 31 eine erste Gleitschiene 44 aufweist, welche am Magazingehäuse 27 aufgenommen ist und eine zweite Gleitschiene 45 aufweist, welche an der Speicherschiene 28 aufgenommen ist. Zusätzlich kann zumindest eine weitere Gleitschiene 46 ausgebildet sein, welche zwischen den beiden Gleitschienen 44, 45 angeordnet ist. Insbesondere kann dabei vorgesehen sein, dass die weitere Gleitschiene 46 mittels Lagerkugeln mit der ersten Gleitschiene 44 gekoppelt ist und dass die weitere Gleitschiene 46 mittels Lagerkugeln mit der zweiten Gleitschiene 45 gekoppelt ist. Anstatt der Lagerkugeln kann auch vorgesehen sein, dass zwischen den einzelnen Gleitschienen 44, 45, 46 eine Gleitflächenführung ausgebildet ist.

In einem weiteren nicht dargestellten Ausführungsbeispiel kann auch vorgesehen sein, dass nur eine erste Gleitschiene 44 und eine zweite Gleitschiene 45 ausgebildet sind, welche ineinander greifen und somit ein Teleskopschienensystem 31 mit verminderter Reichweite bilden. In wieder einem anderen Ausführungsbeispiel kann auch vorgesehen sein, dass zusätzliche, weitere Gleitschienen 46 zwischen der ersten Gleitschiene 44 und der zweiten Gleitschiene 45 angeordnet sind und dadurch die Ausschubreichweite des Teleskopschienensystems 31 vergrößert werden kann.

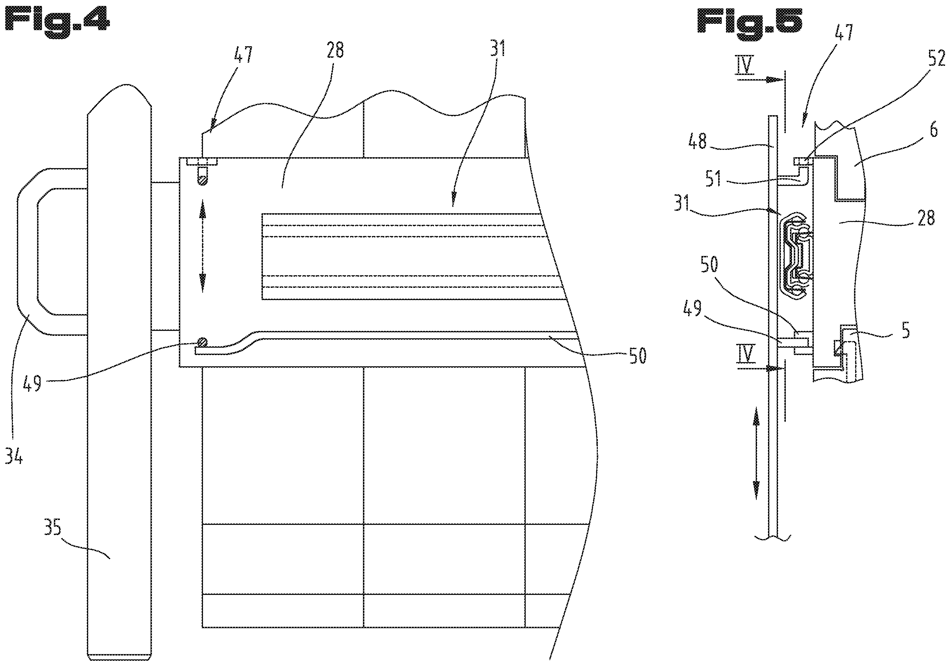

In den Figuren 4 und 5 ist eine Seitenansicht bzw. eine Ansicht von vorne eines weiteren Ausführungsbeispiels des Werkzeugmagazins 26 dargestellt. Wie aus den Figuren 4 und 5 ersichtlich, kann vorgesehen sein, dass die einzelnen Speicherschienen 28 mittels einer Riegelvorrichtung 47 gegeneinander verriegelt sind, sodass immer nur eine Speicherschiene 28 aus dem Magazingehäuse 27 ausgezogen werden kann. Durch die Riegelvorrichtung 47 kann die Sicherheit des Magazingehäuses 27 erhöht werden, da die Kippstabilität des Magazingehäuses 27 bei maximal einer ausgezogenen Speicherschiene 28 verbessert werden kann.

Wie aus den Fig. 4 und 5 ersichtlich, kann vorgesehen sein, dass die Riegelvorrichtung 47 eine Führungsstange 48 aufweist, welche im Magazingehäuse 27 auf und ab verschiebbar gelagert ist. An der Führungsstange 48 können mehrere Führungszapfen 49 angeordnet sein, wobei jeder der Führungszapfen 49 einer Speicherschiene 28 zugeordnet sein kann.

Weiters kann vorgesehen sein kann, dass an der Speicherschiene 28 eine Führungskulisse 50 angeordnet ist, mit welcher der Führungszapfen 49 in Eingriff steht. Die Führungskulisse 50 ist hierbei so ausgebildet, dass der Führungszapfen 49 und somit die Führungsstange 48 angehoben wird, wenn eine Speicherschiene 28 aus dem Magazingehäuse 27 ausgezogen wird.

Weiters ist an der Führungsstange 48 ein Sperrstift 51 angeordnet, welcher zum Eingreifen in eine Sperrplatte 52 ausgebildet ist, die an der Speicherschiene 28 angeordnet ist. Wird nun eine Speicherschiene 28 aus dem Magazingehäuse 27 ausgezogen und dadurch die Führungsstange 48 angehoben, so greift bei den darunter liegenden und den darüber liegenden Speicherschienen 28 der Sperrstift 51 in die Sperrplatte 52 ein. Dadurch werden diese Speicherschienen 28 verriegelt und es ist nicht möglich diese auszuziehen.

Um die auszuziehende Speicherschiene 28 ungehindert ausziehen zu können, muss vorgesehen sein, dass die Sperrplatte 52 eine geringe Längserstreckung aufweist und dass die Führungskulisse 50 so ausgebildet ist, dass Sperrstift 51 erst dann nach oben verschoben wird, wenn die Sperrplatte 52 genügend weit nach vorne verschoben ist und daher der Sperrstift 51 der auszuziehenden Speicherschiene 28 nicht in die Sperrplatte 52 der auszuziehenden Speicherschiene 28 eingreift. Somit kann die Funktionalität des Auszuges der Speicherschiene 28 erhalten bleiben.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | Teleskopschienensystem |
| 2 | Werkstück | 32 | Speicherschienenfach |
| 3 | Biegemaschine | 33 | Vorderseite Speicherschiene |
| 4 | Biegewerkzeug | 34 | Haltegriff |
| 5 | Biegestempel | 35 | Blendenabschnitt |
| 6 | Biegegesenk | 36 | Länge Speicherschiene |
| 7 | Maschinengestell | 37 | Seitenwand |
| 8 | Bodenplatte | 38 | Werkzeuglade |
| 9 | Seitenwange | 39 | untere Aufnahmenut |
| 10 | Seitenwange | 40 | obere Aufnahmenut |
| 11 | Querverband | 41 | Ausnehmung Aufnahmenut |
| 12 | erster Pressbalken | 42 | Riegelnase |
| 13 | Linearführung | 43 | Höhe |
| 14 | zweiter Pressbalken | 44 | erste Gleitschiene |
| 15 | Stirnfläche | 45 | zweite Gleitschiene |
| 16 | Stirnfläche | 46 | weitere Gleitschiene |
| 17 | erste Werkzeugaufnahme | 47 | Riegelvorrichtung |
| 18 | zweite Werkzeugaufnahme | 48 | Führungsstange |
| 19 | Antriebsanordnung | 49 | Führungszapfen |
| 20 | Antriebsmittel | 50 | Führungskulisse |
| 21 | Energienetz | 51 | Sperrstift |
| 22 | Steuervorrichtung | 52 | Sperrplatte |
| 23 | Eingabeterminal | | |
| 24 | Spindeltrieb | | |
| 25 | Biegekante | | |
| 26 | Werkzeugmagazin | | |
| 27 | Magazingehäuse | | |
| 28 | Speicherschiene | | |

## Patentansprüche

1. Werkzeugmagazin (26) für eine Biegemaschine (3), insbesondere für eine Abkantpresse, wobei das Werkzeugmagazin (26) mehrere Speicherschienen (28) aufweist, welche in einem Magazingehäuse (27) angeordnet sind und zur Aufnahme von Biegewerkzeugen (4) dienen, wobei die Speicherschienen (28) derart ausgebildet sind, dass in deren Längserstreckung (30) mehrere Biegewerkzeuge (4) hintereinander gereiht Platz finden, wobei die Speicherschienen (28) in Richtung deren Längserstreckung (30) aus einer Vorderseite (29) des Magazingehäuses (27) ausziehbar sind, **dadurch gekennzeichnet, dass** zumindest eine der ausziehbaren Speicherschienen (28) jeweils zur Aufnahme eines Biegestempels (5) und eines Biegegesenks (6) ausgebildet ist, wobei in dieser ausziehbaren Speicherschiene (28) eine untere Aufnahmenut (39) zur Aufnahme des Biegestempels (5) ausgebildet ist und in dieser ausziehbaren Speicherschiene (28) eine obere Aufnahmenut (40) zur Aufnahme des Biegegesenks (6) ausgebildet ist, und dass die Speicherschiene (28) mittels einem Teleskopschienensystem (31) im Magazingehäuse (27) aufgenommen ist.

2. Werkzeugmagazin nach Anspruch 1, **dadurch gekennzeichnet, dass** die Speicherschienen (28) einzeln und unabhängig voneinander aus dem Magazingehäuse (27) ausziehbar sind.

3. Werkzeugmagazin nach Anspruch 1 oder 2, **dadurch gekennzeichnet, dass** die einzelnen Speicherschienen (28) übereinanderliegend im Magazingehäuse (27) angeordnet sind.

4. Werkzeugmagazin nach einem der vorhergehenden Ansprüche, **dadurch gekennzeichnet, dass** in der unteren Aufnahmenut (39) eine Ausnehmung (41) angeordnet ist, in welche eine Riegelnase (42) des Biegestempels (5) eingreifen kann.

5. Werkzeugmagazin nach einem der vorhergehenden Ansprüche, **dadurch gekennzeichnet, dass** das Teleskopschienensystem (31) eine erste Gleitschiene (44) aufweist, welche am Magazingehäuse (27) aufgenommen ist, eine zweite Gleitschiene (45) aufweist, welche an der Speicherschiene (28) aufgenommen ist und zumindest eine dritte zwischen den beiden Gleitschienen (44, 45) angeordnete weitere Gleitschiene (46), wobei die einzelnen Gleitschienen (44, 46 und 45, 46) mittels einer Gleitführung oder mittels Lagerkugeln miteinander gekoppelt sind.

6. Werkzeugmagazin nach einem der vorhergehenden Ansprüche, **dadurch gekennzeichnet, dass** an einzelnen der Speicherschienen (28) stirnseitig ein Haltegriff (34) angeordnet ist.

7. Werkzeugmagazin nach einem der vorhergehenden Ansprüche, **dadurch gekennzeichnet, dass** an einzelnen der Speicherschienen (28) stirnseitig ein Blendenabschnitt (35) angeordnet ist.

8. Werkzeugmagazin nach einem der vorhergehenden Ansprüche, **dadurch gekennzeichnet, dass** im Magazingehäuse (27) mehrere Speicherschienenfächer (32) nebeneinander angeordnet sind, wobei in einzelnen der Speicherschienenfächer (32) mehrere Speicherschienen (28) übereinander angeordnet sind.

9. Werkzeugmagazin nach einem der vorhergehenden Ansprüche, **dadurch gekennzeichnet, dass** zumindest eine der Speicherschienen (28) quer zur Längserstreckung (30) aus einer Seitenwand (37) des Magazingehäuses (27) ausziehbar ist.

10. Werkzeugmagazin nach einem der vorhergehenden Ansprüche, **dadurch gekennzeichnet, dass** mehr als 50% der Speicherschienen (28) in einer Höhe (43) vom Boden zwischen 60cm und 170cm angeordnet sind.

11. Werkzeugmagazin nach einem der vorhergehenden Ansprüche, **dadurch gekennzeichnet, dass** einzelne der Speicherschienen (28) in deren Höhe (43) verstellbar sind.

12. Werkzeugmagazin nach einem der vorhergehenden Ansprüche, **dadurch gekennzeichnet, dass** die einzelnen Speicherschienen (28) an einem Umlaufsystem angeordnet sind.

13. Werkzeugmagazin nach einem der vorhergehenden Ansprüche, **dadurch gekennzeichnet, dass** die einzelnen Speicherschienen (28) mittels einer Riegelvorrichtung (47) gegeneinander verriegelt sind, sodass im ausgezogenen Zustand einer Speicherschiene (28) die weiteren Speicherschienen (28) nicht ausgezogen werden können.

14. Werkzeugmagazin nach einem der vorhergehenden Ansprüche, **dadurch gekennzeichnet, dass** zusätzlich zu den Speicherschienen (28) eine Werkzeuglade (38) im Magazingehäuse (27) aufgenommen ist und aus dessen Vorderseite (29) ausziehbar ist.

15. Werkzeugmagazin nach einem der vorhergehenden Ansprüche, **dadurch gekennzeichnet, dass** die Speicherschienen (28) eine Länge (36) zwischen 50cm und 200cm, insbesondere zwischen 80cm und 150cm, aufweisen.

16. Fertigungsanlage umfassend eine Biegemaschine (3) und ein Werkzeugmagazin (26), welches neben einer Seitenwange (9, 10) der Biegemaschine (3) angeordnet ist, **dadurch gekennzeichnet, dass** das Werkzeugmagazin (26) nach einem der vorhergehenden Ansprüche ausgebildet ist.

## Claims

1. A tool magazine (26) for a bending machine (3), in particular for a press brake, wherein the tool magazine (26) has multiple storage rails (28), which are arranged in a magazine housing (27) and serve to hold bending tools (4), wherein the storage rails (28) are designed in such a way that multiple bending tools (4) can fit lined up one behind the other in the longitudinal extension (30) of the storage rails (28), wherein the storage rails (28) can be pulled out from a front side (29) of the magazine housing (27) in the direction of their longitudinal extension (30), **characterized in that** at least one of the storage rails (28) that can be pulled out is respectively designed for holding a bending punch (5) and a bending die (6), wherein in this storage rail (28) that can be pulled out, a lower receiving groove (39) is designed for holding the bending punch (5) and in this storage rail (28) that can be pulled out, an upper receiving groove (40) is designed for holding the bending die (6), and that the storage rail (28) is held in the magazine housing (27) by means of a telescopic rail system (31).

2. The tool magazine according to claim 1, **characterized in that** the storage rails (28) can be pulled out of the magazine housing (27) individually and independently from one another.

3. The tool magazine according to claim 1 or 2, **characterized in that** the individual storage rails (28) are arranged one above the other in the magazine housing (27).

4. The tool magazine according to one of the preceding claims, **characterized in that** a recess (41), in which a locking tab (42) of the bending punch (5) may engage, is arranged in the lower receiving groove (39).

5. The tool magazine according to one of the preceding claims, **characterized in that** the telescopic rail system (31) comprises a first sliding rail (44), which is held on the magazine housing (27), a second sliding rail (45), which is held on the storage rail (28) and at least one third further sliding rail (46) arranged between the two sliding rails (44, 45), wherein the individual sliding rails (44, 46 and 45, 46) are coupled to one another by means of a sliding guide or by means of bearing balls.

6. The tool magazine according to one of the preceding claims, **characterized in that** a handle (34) is arranged on the front sides of individual ones of the storage rails (28).

7. The tool magazine according to one of the preceding claims, **characterized in that** a faceplate section (35) is arranged on the front sides of individual ones of the storage rails (28).

8. The tool magazine according to one of the preceding claims, **characterized in that** multiple storage rail compartments (32) are arranged next to one another in the magazine housing (27), wherein in individual ones of the storage rail compartments (32), multiple storage rails (28) are arranged on top of one another.

9. The tool magazine according to one of the preceding claims, **characterized in that** at least one of the storage rails (28) can be pulled out from a lateral wall (37) of the magazine housing (27) transversely to the longitudinal extension (30).

10. The tool magazine according to one of the preceding claims, **characterized in that** more than 50% of the storage rails (28) are arranged at a height (43) of between 60 cm and 170 cm from the ground.

11. The tool magazine according to one of the preceding claims, **characterized in that** individual ones of the storage rails (28) are adjustable in their height (43).

12. The tool magazine according to one of the preceding claims, **characterized in that** the individual storage rails (28) are arranged on a circulation system.

13. The tool magazine according to one of the preceding claims, **characterized in that** the individual storage rails (28) are locked with respect to one another by means of a locking device (47), such that in the pulled-out state of a storage rail (28), the further storage rails (28) cannot be pulled out.

14. The tool magazine according to one of the preceding claims, **characterized in that** in addition to the storage rails (28), a tool tray (38) is held in the magazine housing (27) and can be pulled out from its front side (29).

15. The tool magazine according to one of the preceding claims, **characterized in that** the storage rails (28) have a length (36) of between 50 cm and 200 cm, in particular between 80 cm and 150 cm.

16. A production installation comprising a bending machine (3) and a tool magazine (26) arranged next to a side wall (9, 10) of the bending machine (3), **characterized in that** the tool magazine (26) is formed according to one of the preceding claims.

## Revendications

1. Magasin d'outils (26) pour une machine de cintrage (3), plus particulièrement pour une presse plieuse, dans lequel le magasin d'outils (26) comprend plusieurs rails de stockage (28) qui sont disposés dans un boîtier de magasin (27) et permettent le logement d'outils de cintrage (4), dans lequel les rails de stockage (28) sont conçus de façon à ce que, dans leur extension longitudinale (30), sont disposés plusieurs outils de cintrage (4) les uns derrière les autres, dans lequel les rails de stockage (28) peuvent être étirés en direction de leur extension longitudinale (30) hors d'un côté avant (29) du boîtier de magasin (27), **caractérisé en ce qu'**au moins un des rails de stockage extensibles (28) est conçu respectivement pour le logement d'un poinçon de cintrage (5) et d'une matrice de cintrage (6), dans lequel, dans ce rail de stockage extensible (28) est réalisée une rainure de logement inférieure (39) pour le logement du poinçon de cintrage (5) et, dans ce rail de stockage extensible (28), est réalisée une rainure de logement supérieure (40) pour le logement de la matrice de cintrage (6), et **en ce que** le rail de stockage (28) est logé au moyen d'un système de rails télescopiques (31) dans le boîtier de magasin (27).

2. Magasin d'outils selon la revendication 1, **caractérisé en ce que** les rails de stockage (28) peuvent être étirés individuellement et indépendamment l'un de l'autre hors du boîtier de magasin (27).

3. Magasin d'outils selon la revendication 1 ou 2, **caractérisé en ce que** les différents rails de stockage (28) sont disposés de manière superposée dans le boîtier de magasin (27).

4. Magasin d'outils selon l'une des revendications précédentes, **caractérisé en ce que**, dans la rainure de logement inférieure (39) est disposé un évidement (41) dans lequel un embout de verrouillage (42) du poinçon de cintrage (5) peut s'emboîter.

5. Magasin d'outils selon l'une des revendications précédentes, **caractérisé en ce que** le système de rail télescopique (31) comprend une première glissière (44) qui est logée au niveau du boîtier de magasin (27), une deuxième glissière (45), qui est logée au niveau du rail de stockage (28) et au moins une troisième glissière (46) disposée entre les deux glissières (44, 45), dans lequel les différentes glissières (44, 46 et 45, 46) sont couplées entre elles au moyen d'un guidage de glissement ou au moyen de billes de palier.

6. Magasin d'outils selon l'une des revendications précédentes, **caractérisé en ce que**, sur certains des rails de stockage (28), est disposée, côté frontal, une poignée de maintien (34).

7. Magasin d'outils selon l'une des revendications précédentes, **caractérisé en ce que**, sur certains des rails de stockage (28), est disposée, côté frontal, une portion de diaphragme (35).

8. Magasin d'outils selon l'une des revendications précédentes, **caractérisé en ce que**, dans le boîtier de magasin (27) sont juxtaposés plusieurs compartiments de rails de stockage (32), dans lequel, dans certains des compartiments de rails de stockage (32), sont superposés plusieurs rails de stockage (28).

9. Magasin d'outils selon l'une des revendications précédentes, **caractérisé en ce qu'**au moins un des rails de stockage (28) peut être étiré transversalement par rapport à l'extension longitudinale (30) hors d'une paroi latérale (37) du boîtier de magasin (27).

10. Magasin d'outils selon l'une des revendications précédentes, **caractérisé en ce que** plus de 50 % des rails de stockage (28) sont disposés à une hauteur (43) par rapport au sol entre 60 cm et 170 cm.

11. Magasin d'outils selon l'une quelconque des revendications précédentes, **caractérisé en ce que** certains des rails de stockage (28) sont réglables en hauteur (43).

12. Magasin d'outils selon l'une des revendications précédentes, **caractérisé en ce que** les différents rails de stockage (28) sont disposés sur un système de circulation.

13. Magasin d'outils selon l'une des revendications précédentes, **caractérisé en ce que** les différents rails de stockage (28) sont verrouillés les uns par rapport aux autres au moyen d'un dispositif de verrouillage (47) de façon à ce que, dans l'état étiré d'un rail de stockage (28), les autres rails de stockage (28) ne puissent pas être étirés.

14. Magasin d'outils selon l'une des revendications précédentes, **caractérisé en ce que**, en plus des rails de stockage (28), un tiroir à outils (38) est logé dans le boîtier de magasin (27) et peut être étiré hors de son côté avant (29).

15. Magasin d'outils selon l'une des revendications précédentes, **caractérisé en ce que** les rails de stockage (28) présentent une longueur (36) entre 50 cm et 200 cm, plus particulièrement entre 80 cm et 150 cm.

16. Installation de fabrication comprenant une machine de cintrage (3) et un magasin d'outils (26), qui est disposé près d'une joue latérale (9, 10) de la machine de cintrage (3), **caractérisée en ce que** le magasin d'outils (26) est conçu selon l'une des revendications précédentes.
